# EUROPÄISCHE PATENTANMELDUNG

(11) **EP 2 226 525 A1**
(43) Veröffentlichungstag der Anmeldung: **08.09.2010**
(21) Anmeldenummer: 10005825.4
(22) Anmeldetag: 24.09.2008
(51) Int. Cl.: F16F 3/087

(54) **Dämpfungseinrichtung zur Dämpfung von Schwingungen von längserstreckten Elementen**

(30) Priorität: 02.10.2007 AT 15502007
(62) Teilanmeldung aus: 08799930.6
(71) Anmelder: Getzner Werkstoffe Holding GmbH, 6706 Bürs (AT)
(72) Erfinder: Dietrich, Martin, Dipl.-Ing., 6830 Rankweil (AT); Heim, Markus, 6840 Götzis (AT)
(74) Vertreter: Hofmann, Ralf U.

(57) **Zusammenfassung**

Bei einem System zur Ausbildung von Dämpfungseinrichtungen zur Dämpfung von Schwingungen von längserstreckten Elementen (1), insbesondere Zugelementen wie Seilen, Kabeln oder Stäben, durch Verformung von elastomeren Dämpfungselementen (7), ist ein jeweiliges Dämpfungselement (7) einerseits mit einem inneren Verbindungsteil (8) zur Anbindung des Dämpfungselements (7) an das zu dämpfende längserstreckte Element (1) und andererseits mit einem äußeren Verbindungsteil (9) zur Anbindung des Dämpfungselements (7) an mindestens einem Fixteil (4) verbunden. Das System umfasst Dämpfungsmodule (10), die jeweils mindestens ein mit einem inneren und einem äußeren Verbindungsteil (8, 9) verbundenes Dämpfungselement (7) aufweisen, und Basiseinheiten (11) umfasst, an denen jeweils mindestens zwei Dämpfungsmodule (10) befestigbar sind.

## Beschreibung

Die Erfindung bezieht sich auf eine Dämpfungseinrichtung zur Dämpfung von Schwingungen von längserstreckten Elementen, insbesondere Zugelementen wie Seilen, Kabeln oder Stäben, durch Verformung von elastomeren Dämpfungselementen, wobei ein jeweiliges Dämpfungselement einerseits mit einem inneren Verbindungsteil zur Anbindung des Dämpfungselements an das zu dämpfende längserstreckte Element und andererseits mit einem äußeren Verbindungsteil zur Anbindung des Dämpfungselements an mindestens einem Fixteil verbunden ist.

Dämpfungseinrichtungen mit elastomeren Dämpfungselementen kommen beispielsweise zur Dämpfung von Schwingungen von Tragseilen bzw. -kabeln, die zur Abstützung von Brückenabschnitten dienen, zum Einsatz. Diese Tragseile können z. B. durch Windbelastungen, durch Verkehrsbelastungen oder durch seismische Belastungen zum Schwingen angeregt werden. Solche Schwingungen können zur Verunsicherung der Benutzer, zu Schäden an der Brücke und/oder von tragenden Bauwerksteilen und im schlimmsten Fall zur Zerstörung und zum Einsturz der Brücke führen. Die Schwingungen der Tragseile müssen daher verhindert oder begrenzt werden.

Hierfür sind nach dem Stand der Technik unterschiedliche Maßnahmen bekannt. Neben der gegenseitigen Kopplung und Verspannung von Seilen untereinander oder von Seilen zum Tragwerk werden auch Dämpfungseinrichtungen im Bereich der Seilenden in der Nähe der Verankerungspunkte der Seile eingesetzt. Als Dämpfungselemente kommen z. B. Hydraulik-, Reib- und Elastomerdämpfer zum Einsatz, die gegen das Tragwerk, insbesondere gegen das Brückendeck abgestützt werden. Dämpfungselemente in Form von Hydraulik- oder Reibelementen weisen einen großen Verschleiß auf, sind im Betrieb anfällig, z. B. gegenüber Korrosion, und können ihre Wirksamkeit erst ab einer Mindestschwingungsampliltude entfalten, da einerseits die konstruktionsbedingte Haftreibung durch die eingetragene Schwingungsenergie überwunden werden muss und andererseits ein dauerhafter Betrieb zu rasch fortschreitender Abnützung führt. Elastomere Dämpfungselemente sind zwar üblicherweise bedingt durch das Funktionsprinzip der Umwandlung von Energie aus viskoelastischer Verformung in Wärmeenergie in ihrer Wirksamkeit begrenzt und können nur geringere Mengen an Schwingungsenergie dissipieren, weisen aber in der Regel keine oder nur geringe Abnutzungserscheinungen auf.

Dämpfungseinrichtungen zur Dämpfung von Schwingungen werden für unterschiedliche Arten von längserstreckten Elementen, insbesondere Zugelementen wie Seilen, Kabeln und Stäben eingesetzt.

Eine Dämpfungseinrichtung der eingangs genannten Art ist aus der WO 02/29276 A1 bekannt. Die elastomeren Dämpfungselemente verlaufen jeweils zwischen einem plattenförmigen Verbindungsteil, über welches das Dämpfungselement an das zu dämpfende Element angebunden ist, und einem plattenförmigen Verbindungsteil, über welches das Dämpfungselement an ein Fixteil, beispielsweise am Tragwerk einer Brücke, angebunden ist. Die Dämpfungseinrichtung besitzt in Längsrichtung des zu dämpfenden Elements beabstandet zwei Verbindungsteile zur Anbindung am zu dämpfenden Element und ein dazwischenliegendes Verbindungsteil zur Anbindung am Fixteil. Die beiden am zu dämpfenden Element angebundenen Verbindungsteile sind über Zugstangen miteinander verbunden, welche Öffnungen im dazwischenliegenden Verbindungsteil durchsetzen. Zwischen den Verbindungsteilen verlaufen jeweils zwei elastomere Dämpfungselemente, die sich auf gegenüberliegenden Seiten des zu dämpfenden Elements befinden. Ein Nachteil dieser Einrichtung besteht in der eingeschränkten Wirksamkeit bzw. Dämpfungsleistung.

Eine weitere Dämpfungseinrichtung der eingangs genannten Art ist aus der DE 101 62 897 A1 bekannt. Hier sind zwei in Längsrichtung beabstandete Verbindungselemente zur Anbindung an ein Fixteil vorhanden, zwischen denen ein Verbindungsteil zur Anbindung an das zu dämpfende Element liegt. Zwischen den Verbindungsteilen verlaufen wiederum elastomere Dämpfungselemente. Um das zu dämpfende Element herum sind mehrere separate elastomere Dämpfungselemente vorhanden. Auch bei dieser Konstruktion ist die Wirksamkeit der Dämpfung bzw. die Dämpfungsleistung eingeschränkt.

Bei der aus der JP 06136718 A bekannten Dämpfungseinrichtung liegen in Längsrichtung beabstandet ein Verbindungsteil zur Anbindung am zu dämpfenden Element und ein Verbindungsteil zur Anbindung an einem Fixteil. Ein elastomeres Dämpfungselement verläuft zwischen diesen beiden Verbindungsteilen.

Aus der EP C914521 B1 ist eine Dämpfungseinrichtung bekannt, bei der beidseitig eines inneren Verbindungsteils zur Anbindung an das zu dämpfende Element äußere Verbindungsteile mit gegenüber dem inneren Verbindungsteil größerem Durchmesser zur Anbindung an ein Fixteil liegen. Die zwischen den Verbindungsteilen verlaufenden Dämpfungselemente weisen jeweils eine kreisbogenförmige Gestalt auf.

Aus der JP 4237707 A geht ein hydraulischer Kabeldämpfer hervor, bei dem eine Viskoseflüssigkeit in ein das Kabel umgebendes Rohr eingefüllt ist.

Aus der EP 1 655 159 A1 geht eine Aufhängung für die Räder eines Fahrzeuges hervor, wobei Bügel, die die Räder lagern und an Trägern verschwenkbar gelagert sind, über Federungs- und Dämpfungselemente und ein Verbindungsglied miteinander verbunden sind. Das Verbindungsglied umfasst einen Stab, für dessen Lagerung ein elastisches Element innen und außen mit starren Elementen verbunden ist. Innerhalb des inneren Elements verläuft der Stab und das äußere Element ist mit einem Fixteil verbunden.

Aufgabe der Erfindung ist es, ein System der eingangs genannten Art bereitzustellen, welches eine einfache Ausbildung von an unterschiedliche Situationen angepassten Dämpfungseinrichtungen ermöglicht. Dies gelingt erfindungsgemäß durch ein System mit den Merkmalen des Anspruchs 1.

Das System umfasst Dämpfungsmodule, welche die Dämpfungselemente aufweisen, und Basiseinheiten, an denen jeweils mindestens zwei Dämpfungsmodule befestigbar sind. Es können hierbei unterschiedliche Basiseinheiten vorgesehen sein, die zur Aufnahme von unterschiedlichen Anzahlen von Dämpfungsmodulen ausgebildet sind. Die Dämpfungsleistung kann dadurch in einfacher Weise an die jeweiligen Erfordernisse angepasst werden.

Vorteilhafterweise ist ein erfindungsgemäßes System einfach montierbar und - beispielsweise zu Wartungs- oder Reparaturzwecken - einfach demontierbar.

Die Befestigung der Dämpfungsmodule an den Basiseinheiten erfolgt vorteilhafterweise über eine lösbare Verbindung, insbesondere Schraubverbindung oder Klemmverbindung. In einer vorteilhaften Ausführungsform ist vorgesehen, dass eine jeweilige Basiseinheit ein Anbindungsteil aufweist, welches die Form eines Umfangsteils eines Rohres besitzt, sich also über einen Teil des Umfangs eines vollständigen Rohrs erstreckt. Zur Montage am zu dämpfenden Element werden die Anbindungsteile um das zu dämpfende Element gelegt und miteinander verbunden, beispielsweise über eine Schraubverbindung, durch welche sie an das zu dämpfende Element angepresst werden.

Eine mit einem erfindungsgemäßen System ausgebildete Dämpfungseinrichtung weist "hintereinander geschaltete" elastomere Dämpfungselemente auf, welche vorzugsweise ausschließlich oder zumindest überwiegend schubverformt werden. Hierzu ist jedes der Dämpfungselemente auf einer Seite starr mit einem inneren Verbindungsteil und auf seiner gegenüberliegenden Seite starr mit einem äußeren Verbindungsteil verbunden, wobei die Verbindungsteile in Längsrichtung der Dämpfungseinrichtung bzw. des zu dämpfenden Elements distanziert sind.

Vorzugsweise sind mindestens zwei in Längsrichtung der mit dem erfindungsgemäßen System ausgebildeten Dämpfungseinrichtung bzw. des zu dämpfenden Elements voneinander distanzierte äußere Verbindungsteile zur Anbindung an das mindestens eine Fixteil und mindestens zwei in Längsrichtung der Dämpfungseinrichtung bzw. des zu dämpfenden Elements voneinander distanzierte innere Verbindungsteile zur Anbindung am zu dämpfenden Element vorhanden. Besonders bevorzugt ist hierbei eine Ausbildung, bei der mehr als zwei äußere und mehr als zwei innere Verbindungsteile vorhanden sind.

In einer bevorzugten Ausführungsform ist zumindest ein Teil der inneren und/oder äußeren Verbindungsteile plattenförmig ausgebildet. Vorzugsweise besitzen alle inneren und/oder äußeren Verbindungsteile eine plattenförmige Ausbildung.

Wenn in dieser Schrift von "innen" und "außen" die Rede ist, so ist hiermit die Lage relativ zur zentralen Längsachse des zu dämpfenden Elements bzw. der Dämpfungseinrichtung die Rede, d. h. ein weiter innen liegendes Teil besitzt einen geringeren Abstand von dieser zentralen Längsachse als ein weiter außen liegendes Teil.

Ein vorteilhafte Ausführungsbeispiel der Erfindung sieht vor, dass zumindest einige der Dämpfungselemente, vorzugsweise alle Dämpfungselemente, teilringförmig ausgebildet sind. Es kann dadurch ein großes Volumen der Dämpfungselemente erzielt werden. Die Dämpfungswirkung von auf Schub beanspruchten elastomeren Dämpfungselementen ist direkt proportional zum Volumen der Dämpfungselemente. Günstigerweise wird das zu dämpfende Element insgesamt über mindestens 90% seines Umfangs von solchen teilringförmigen, beispielsweise im Wesentlichen halbringförmigen, Dämpfungselementen umgeben. In einer bevorzugten Ausführungsform ergänzen sich jeweils zwei halbringförmige Dämpfungselemente zu einem im Wesentlichen vollständigen Ring.

Weitere Vorteile und Einzelheiten der Erfindung werden im Folgenden anhand der beiliegenden Zeichnung erläutert. In dieser zeigen:
- Fig. 1: eine stark schematisierte Darstellung der Anordnung der Dämpfungseinrichtung in der Nähe der Verankerungseinrichtung des zu dämpfenden Elements an einem Fixteil;
- Fig. 2: eine Vorderansicht einer mit einem erfindungsgemäßen System ausgebildeten Dämpfungseinrichtung;
- Fig. 3: und 4 eine Seitenansicht und eine Schrägsicht der mit einem erfindungsgemäßen System ausgebildeten Dämpfungseinrichtung (ohne Verbindungsschrauben), wo- bei in Fig. 3 mit strichlierten Linien das zu dämpfende Element angedeutet ist;
- Fig. 5: eine Schrägsicht einer Basiseinheit zur Aufnahme von Dämpfungsmodulen;
- Fig. 6: eine Schrägsicht eines Dämpfungsmoduls;
- Fig. 7: eine Schrägsicht der Basiseinheit mit einem aufgesetzten Dämpfungsmodul.

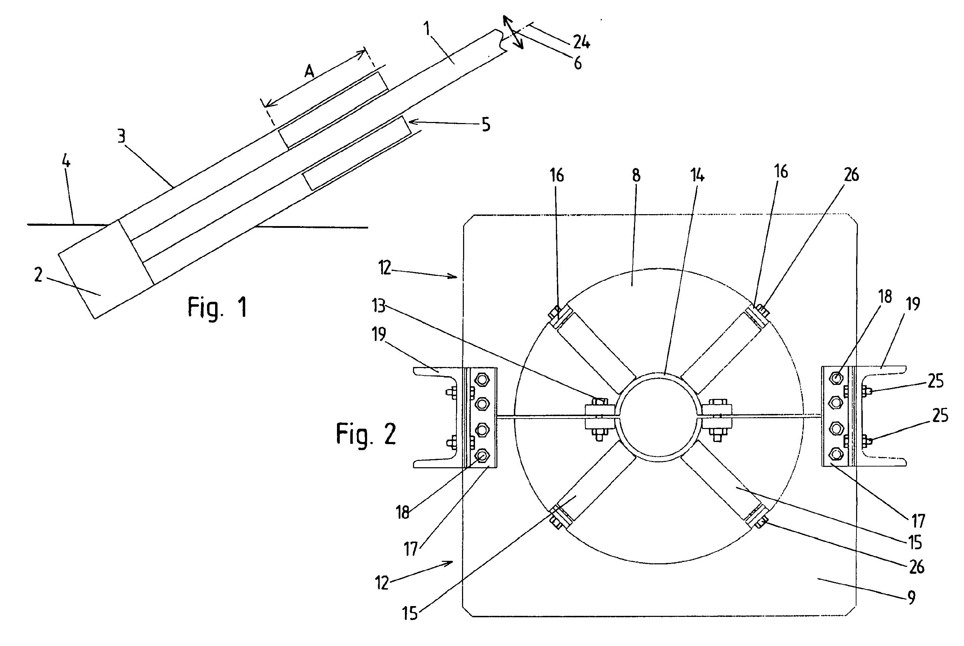

Als Beispiel für eine Anwendung einer mit einem erfindungsgemäßen System ausgebildeten Dämpfungseinrichtung zeigt Fig. 1 stark schematisiert eine Anordnung um ein in Form eines Tragseils ausgebildeten zu dämpfenden längserstreckten Elements 1. Es kann sich beispielsweise um ein Tragseil zur Abstützung eines Brückenabschnitts handeln. Das Tragseil ist in bekannter Weise über eine Verankerungskonstruktion 2 befestigt, wobei es im Endabschnitt in ein Durchdringungsrohr 3 hinein verläuft. Die Verankerung des längserstreckten Elements 1 erfolgt hier gegenüber einem Fixteil 4, das von einem Brückendeck gebildet wird. Die Dämpfungseinrichtung 5 ist im Durchdringungsrohr 3 angebracht. Durch die Anordnung im Durchdringungsrohr 3 sind sämtliche Teile wetter- und somit korrosionsgeschützt. Alternativ kann die Dämpfungseinrichtung auch außerhalb des Durchdringungsrohres 3 angebracht und mit diesem oder mit dem Fixteil 4 verbunden werden. Eine zu bedämpfende transversale Schwingung ist schematisch durch einen Doppelpfeil 6 angedeutet.

Die Dämpfung erfolgt durch viskoelastische Verformung der elastomeren Dämpfungselemente der Dämpfungseinrichtung, welche hierbei schubverformt werden.

Mit Hilfe einer mit einem erfindungsgemäßen System ausgebildeten Dämpfungseinrichtung können auch Schwingungen von anderen Arten von längsausgedehnten Elementen, insbesondere Zugelementen wie Seilen, Kabeln, Stäben o. dgl. gedämpft werden. Beispielsweise kann die Dämpfungseinrichtung im Zusammenhang mit Zugelementen in Form von Seilen, Kabeln o. dgl. zur Stabilisierung von unterschiedlichen Arten von Bauwerken, beispielsweise Brücken, Sendemasten oder Stadiondächern eingesetzt werden. Die Fixteile, an welche die Dämpfungseinrichtung angebunden werden, werden demgemäß von Teilen der Bauwerke, insbesondere ihrer Tragkonstruktionen, oder ihrer Fundamente gebildet. Beispielsweise kann eine erfindungsgemäße Dämpfungseinrichtung auch zur Dämpfung von Schwingungen von Rohren zur Führung von flüssigen oder gasförmigen Medien dienen.

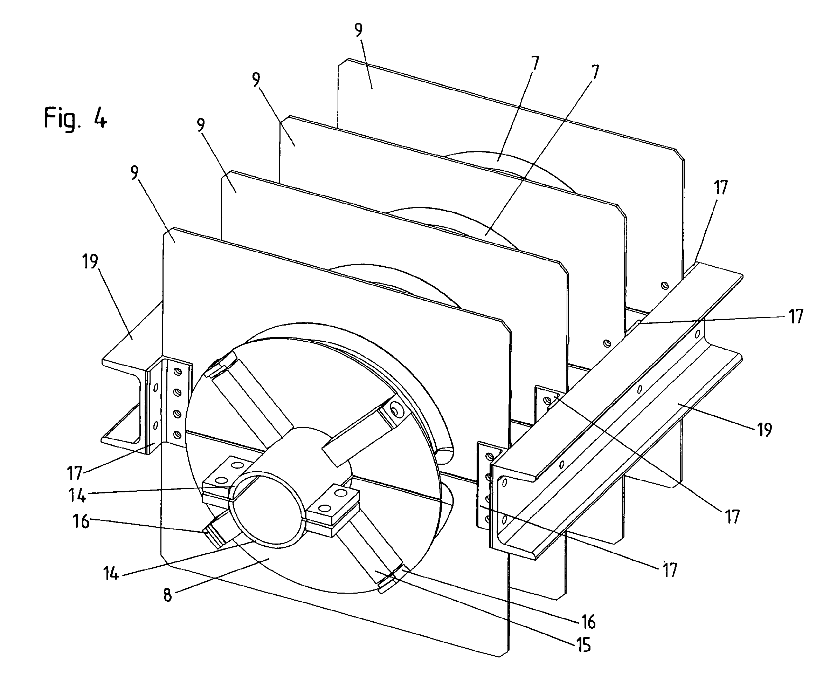

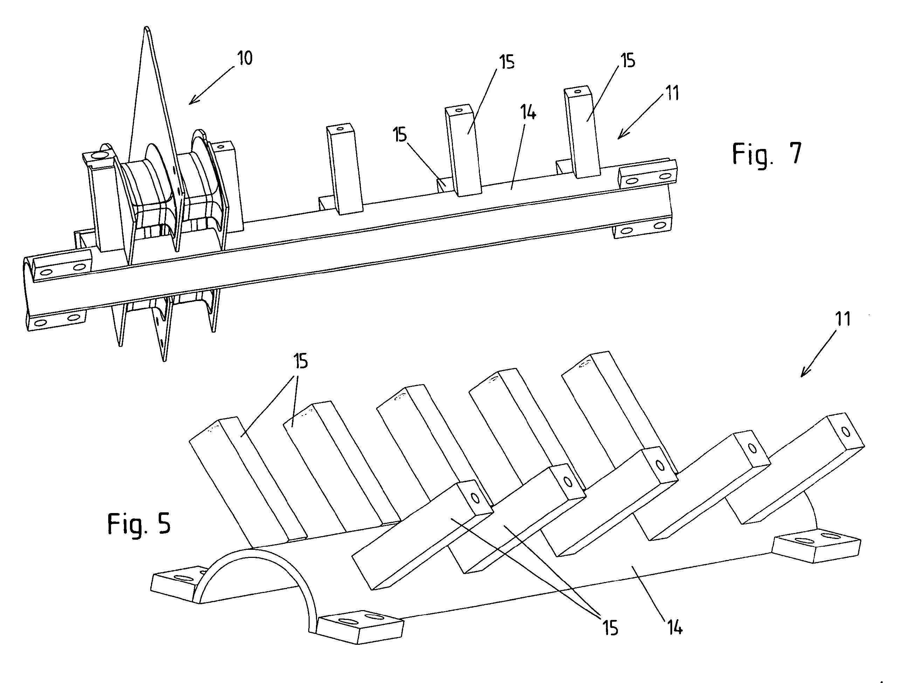

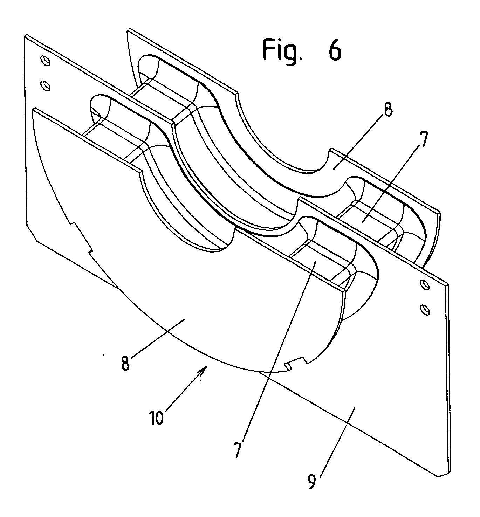

Eine erste Ausführungsform der Erfindung wird im Folgenden anhand der Fig. 2 bis 7 genauer erläutert. Die mit einem erfindungsgemäßen System ausgebildete Dämpfungseinrichtung umfasst eine Mehrzahl von Dämpfungselementen 7, die jeweils aus einem Elastomer bestehen. Die Dämpfungselemente 7 weisen vorzugsweise jeweils eine teilringförmige Ausbildung auf, d. h. sie erstrecken sich über einen Teil des vollständigen Umfangs eines Ringes. Im gezeigten Ausführungsbeispiel erstrecken sich die Dämpfungselemente jeweils annähernd (d. h. +/- 20°) über 180°.

Ein jeweiliges Dämpfungselement 7 verläuft jeweils zwischen einem inneren Verbindungsteil 8, über welches die Anbindung des Dämpfungselements 7 an das zu dämpfende Element 1 erfolgt, und einem äußeren Verbindungsteil 9, über welches die Anbindung des Dämpfungselements 7 an das Fixteil 4 erfolgt. Das Dämpfungselement 7 ist hierbei bezogen auf seine Erstreckung in Richtung der Längsachse 24 der Dämpfungseinrichtung bzw. des zu dämpfenden Elements 1 (= in Längsrichtung der Dämpfungseinrichtung bzw. des zu dämpfenden Elements 1) an seinem einen Ende mit dem entsprechenden inneren Verbindungsteil 8 und an seinem anderen Ende mit dem entsprechenden äußeren Verbindungsteil 9 fest verbunden. Anders ausgedrückt ist ein jeweiliges Dämpfungselement 7 an den zueinander gerichteten Seiten der in Längsrichtung beabstandeten Verbindungsteile 8, 9 festgelegt.

Die Verbindungen der Dämpfungselemente 7 mit den Verbindungsteilen 8, 9 sind bevorzugterweise stoffschlüssig. Besonders bevorzugt ist es hierbei, dass das Elastomer an das jeweilige Verbindungsteil 8, 9 angeschäumt ist, d. h. die Verbindungsteile 8, 9 werden bei der Herstellung des Dämpfungselements 7 in der Form angeordnet und das noch nicht ausgehärtete Material, aus dem das Dämpfungselement 7 besteht, benetzt die - vorzugsweise zuvor aufgeraute - Oberfläche des jeweiligen Verbindungsteils 8, 9. Denkbar und möglich ist aber beispielsweise auch eine Klebeverbindung zwischen dem Dämpfungselement 7 und dem jeweiligen Verbindungsteil 8, 9. Auch kraft- und/oder formschlüssige Verbindungen, beispielsweise Verschraubungen sind anstelle von stoffschlüssigen Verbindungen oder zusätzlich hierzu möglich.

Die inneren Verbindungsteile 8 stehen vorzugsweise spielfrei mit dem zu dämpfenden Element 1 in Verbindung (im gezeigten Ausführungsbeispiel über die weiter unten erläuterte Basiseinheit). Die äußeren Verbindungsteile 9 stehen vorzugsweise spielfrei mit dem mindestens einen Fixteil 4 in Verbindung (im gezeigten Ausführungsbeispiel über die weiter unten beschriebenen Verbindungsschienen). Die äußeren Verbindungsteile 9 weisen hierbei gegenüber dem längserstreckten Element 1 in Bezug auf eine transversale Verschiebung einen Freiraum auf, während die inneren Verbindungsteile 8 bezüglich dem mindestens einen Fixteil 4 in transversaler Richtung einen Freiraum aufweisen. Dadurch ist eine Relativverschiebung zwischen den Verbindungsteilen 8, 9 in transversaler Richtung möglich, wobei es (nur oder hauptsächlich) zu einer Schubverformung der dazwischenliegenden Dämpfungselemente 7 kommt, wodurch die Dämpfung erreicht wird.

Die transversale Verschiebbarkeit zwischen den Verbindungsteilen 8, 9 ist vorzugsweise durch Anschlagelemente begrenzt. Dadurch kann eine übermäßige Beanspruchung der Dämpfungselemente 7 verhindert werden.

Die Dämpfungseinrichtung besitzt einen modularen Aufbau. Hierbei werden zur Ausbildung der Dämpfungseinrichtung Dämpfungsmodule 10 an Basiseinheiten 11 befestigt. Eine jeweilige Basiseinheit mit den daran befestigten Dämpfungsmodulen 10 bildet eine Teilschaleneinheit 12, wobei eine jeweilige Teilschaleneinheit das zu dämpfende Element 1 jeweils über einen Teil seines Umfangs umgibt. Im gezeigten Ausführungsbeispiel umgibt jede Teilschaleneinheit das Element 1 über annähernd (d. h. mit einer Abweichung von maximal 10°) über 180°, sodass die Teilschaleneinheiten 12 auch als Halbschaleneinheiten bezeichnet werden könnten. Im auf dem zu dämpfenden Element 1 montierten Zustand umgeben die Teilschaleneinheiten 12 dieses insgesamt im Wesentlichen über seinen gesamten Umfang, d. h. über insgesamt mindestens 320° seines Umfangs ist das Element 1 von Teilschaleneinheiten 12 umgeben.

Denkbar und möglich wäre es beispielsweise auch, Teilschaleneinheiten vorzusehen, die sich über andere Umfangsteile erstrecken, z. B. jeweils über etwa 120° oder 90°.

Im auf dem zu dämpfenden Element 1 montierten Zustand der Dämpfungseinrichtung sind die Teilschaleneinheiten 12 starr miteinander verbunden und an das zu dämpfende Element 1 angepresst, beispielsweise mittels Verschraubungen 13 (vgl. Fig. 2).

Eine jeweilige Basiseinheit weist ein Anbindungsteil 14 auf, über welches die Anbindung der inneren Verbindungsteile 8 an das zu dämpfende Element 1 erfolgt. Im zusammengebauten Zustand der Teilschaleneinheit 12 sind die inneren Verbindungsteile 8 hierzu starr mit dem Anbindungsteil 14 verbunden. Das Anbindungsteil 14 ist im auf dem zu dämpfenden Element 1 montierten Zustand der Dämpfungseinrichtung 1 an dieses angepresst. Vorzugsweise weist das Anbindungsteil die Form eines Umfangsteils eines Rohres auf, d. h. erstreckt sich also über einen Teil des Umfangs eines vollständigen Rohrs (welches je nach Querschnittsform des zu dämpfenden Elements 1 beispielsweise eine kreisrunde Form besitzt). Somit liegt das Anbindungsteil im montierten Zustand der Dämpfungseinrichtung über einen Teil des Umfangs des zu dämpfenden Elements 1 an diesem an.

Die inneren Verbindungsteile 8 sind an der Basiseinheit 11 mittels Befestigungsteilen 15 befestigt. Im gezeigten Ausführungsbeispiel sind diese Befestigungsteile stabförmig ausgebildet und stehen vom Anbindungsteil 14, mit dem sie starr verbunden sind, nach außen ab. An den stabförmigen Befestigungsteilen sind Klemmschuhe 16 anschraubbar (Schrauben 26, vgl. Fig. 2), welche am jeweiligen inneren Verbindungsteil 8 angreifen (beispielsweise in einer Nut an dessen Außenrand) und dieses gegen das Anbindungsteil 14 verspannen. Andere Arten der Befestigung der inneren Verbindungsteile 8 am Anbindungsteil 14 sind denkbar und möglich.

Im gezeigten Ausführungsbeispiel sind die beiden Basiseinheiten, die nach der Montage der Dämpfungsmodule 10 miteinander verbunden werden, gleich ausgebildet. Auch unterschiedliche Ausbildungen sind möglich.

Ein jeweiliges Dämpfungsmodul 10 umfasst mindestens zwei Dämpfungselemente 7, die an ihren zueinander gerichteten Seiten mit einem zwischen ihnen liegenden gemeinsamen äußeren Verbindungsteil 9 verbunden sind, vorzugsweise wie bereits erläutert stoffschlüssig. An ihren voneinander weggerichteten Seiten sind sie jeweils mit einem inneren Verbindungsteil 8 verbunden, vorzugsweise wie bereits ausgeführt stoffschlüssig.

Ein derartiges Modul wird jeweils zwischen in Längsrichtung der Dämpfungseinrichtung bzw. des Elements 1 beabstandeten Befestigungsteilen 15 eingesetzt, wobei das Dämpfungsmodul 10 vorzugsweise komprimiert wird. Auf die Dämpfungselemente 7 wirkende Zugspannungen können dadurch vermieden oder zumindest verringert werden.

Ein jeweiliges Dämpfungsmodul 10 könnte auch mehr als zwei in Längsrichtung der Dämpfungseinrichtung bzw. des Elements 1 jeweils beabstandete Dämpfungselemente 7 aufweisen, wobei auch weitere Verbindungsteile 8, 9 vorhanden wären. Mit den mittleren Verbindungsteilen 8, 9 wären jeweils beidseitig Dämpfungselemente 7 verbunden, vorzugsweise stoffschlüssig, mit den randseitigen Verbindungsteilen 8 werden nur an ihren zueinander gerichteten Seiten Dämpfungselemente 7 verbunden.

Für den Zusammenbau der Dämpfungseinrichtung und die Montage auf dem zu dämpfenden Element 1 werden zunächst die Teilschaleneinheiten 12 ausgebildet, indem die Dämpfungsmodule 10 auf der jeweiligen Basiseinheit 11 montiert werden. Die Teilschaleneinheiten 12 werden in der Folge an das längserstreckte Element 1 angelegt und miteinander verbunden, wodurch sie auch gegen das Element 1 angepresst werden. In der Folge werden die äußeren Verbindungsteile 9 mit dem mindestens einen Fixteil 4 verbunden.

Die Anbringung am zu dämpfenden längserstreckten Element kann in der Nähe seines Längsendes erfolgen, insbesondere im Fall von längserstreckten Elementen, die als Zugelemente, beispielsweise Seile, Kabel oder Stäbe ausgebildet sind.

Bevorzugt ist es hierbei, dass auch die äußeren Verbindungsteile 9 der verschiedenen Teilschaleneinheiten 12 miteinander verbunden werden, beispielsweise wie dargestellt durch winkelförmige Verbindungsstücke 17, die mit zwei benachbarten äußeren Verbindungsteilen 9 von unterschiedlichen Teilschaleneinheiten 12 verschraubt sind (die Schrauben 18 sind nur in Fig. 1 dargestellt). An den winkelförmigen Verbindungsstücken 17 sind weiters Verbindungsschienen 19 angeschraubt, die sich in Längsrichtung der Dämpfungseinheit erstrecken (die Schrauben 25 sind nur in Fig. 2 dargestellt). Für jedes Dämpfungsmodul 10 einer jeweiligen Teilschaleneinheit 12 ist das jeweils mindestens eine äußere Verbindungsteil 9 über das Verbindungsstück 17 mit einem äußeren Verbindungsteil eines Dämpfungsmoduls 10 der mindestens einen weiteren Teilschaleneinheit 12 verbunden. Über eine jeweilige Verbindungsschiene sind die äußeren Verbindungsteile 9 der Dämpfungsmodule 10 einer jeweiligen Teilschaleneinheit 12 miteinander verbunden. Im gezeigten Ausführungsbeispiel, bei dem die Teilschaleneinheiten 12 als Halbschalen ausgebildet sind, sind die äußeren Verbindungsteile 9 der beiden Teilschaleneinheiten 12 auf gegenüberliegenden Seiten der Längsachse der Dämpfungseinrichtung bzw. des längserstreckten Elements 1 miteinander verbunden und es sind gegenüberliegende Verbindungsschienen 19 vorhanden, die jeweils mit den Verbindungsstücken 17 auf einer Seite verbunden sind.

Die Verbindungschienen 19 werden mit dem mindestens einen Fixteil 4 verbunden, beispielsweise über Verschraubungen oder Verschweißungen. Die Verbindung der äußeren Verbindungsteile 9 mit dem mindestens einen Fixteil 4 erfolgt somit im gezeigten Ausführungsbeispiel über die Verbindungsstücke 17 und Verbindungsschienen 19.

Die Verbindungsschienen 19 könnten grundsätzlich auch entfallen. Es könnte dann jedes der Verbindungsstücke 17 separat mit dem mindestens einen Fixteil 4 verbunden werden. Die Verbindungsstücke 17 könnten auch eine andere als die dargestellte Form aufweisen. Die Verbindungsschienen 19 könnten auch über andere Teile als über die Verbindungsstücke 17 mit den äußeren Verbindungsteilen 9 verbunden sein.

Denkbar und möglich ist es auch, dass die Verbindung mit dem mindestens einen Fixteil 4 nur über eine Anlage am Fixteil 4 erfolgt, wobei ein möglichst geringes Spiel vorliegen sollte. Beispielsweise könnte das Fixteil 4 von einem Aufnahmerohr ausgebildet werden, welches einen mit den äußeren Verbindungsteilen 9 korrespondierenden Innendurchmesser aufweist. Falls Verbindungsschienen 19 vorhanden sind, könnten im Rohrdurchmesser Aussparungen für diese vorgesehen sein. Andererseits könnten die Verbindungsschienen 19 und auch die Verbindungsstücke 17 bei einer derartigen Ausbildung auch entfallen.

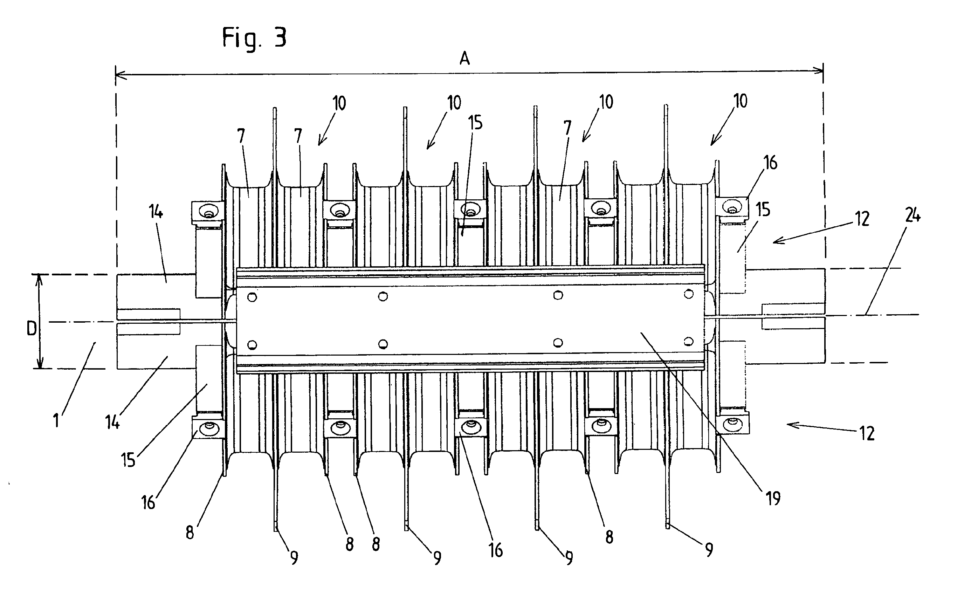

Die auf dem längserstreckten Element 1 montierte Dämpfungseinrichtung wirkt mit diesem über einen Abschnitt A (vgl. Fig. 3) zusammen, dessen Länge mehr als dem fünffachen Wert des Durchmessers D des zu dämpfenden längserstreckten Elements 1 entspricht. Im gezeigten Ausführungsbeispiel liegt die Dämpfungseinrichtung über den Abschnitt A durchgehend am zu dämpfenden Element 1 an.

Durch die Bereitstellung von Basiseinheiten 11 mit unterschiedlichen Längen, die durch eine entsprechende Anzahl von Befestigungsteilen für eine jeweilige Zahl von Dämpfungsmodulen 10 ausgebildet sind, können in einfacher Weise Dämpfungseinrichtungen mit unterschiedlichen Längen bereitgestellt werden. Für solche Dämpfungseinrichtungen mit unterschiedlichen Längen können die gleichen Dämpfungsmodule 10 eingesetzt werden.

Grundsätzlich denkbar und möglich ist auch eine Ausbildung, bei der eine Basiseinheit bereitgestellt wird, an der die Dämpfungsmodule 10 mit ihren äußeren Verbindungsteilen 9 befestigt werden. Somit werden die äußeren Verbindungsteile 9 bei dieser Ausbildung über die Basiseinheit an das mindestens eine Fixteil angebunden. Beispielsweise könnte dann ein Anbindungsteil, welches zur Anbindung an das mindestens eine Fixteil 4 dient, schalenförmig ausgebildet sein, und die Dämpfungsmodulen 10 könnten in diese schalenförmigen Anbindungsteile einsetzbar sein und an diesen befestigbar sein, beispielsweise durch Verschraubungen. Bevorzugt wäre in diesem Fall eine Ausbildung der Dämpfungsmodule, bei der diese in achsialer Richtung jeweils mit einem äußeren Verbindungsteil 9 abschließen. Beispielsweise können zwei äußere Verbindungsteile 9 und ein dazwischenliegendes inneres Verbindungsteil 8 vorgesehen sein, zwischen denen jeweils die Dämpfungselemente 7 verlaufen.

Zur günstigen Aufnahme der auftretenden Kräfte können sich die Dämpfungselemente 7 wie dargestellt im jeweiligen Verbindungsbereich mit einem Verbindungsteil 8, 9 aufweiten, wobei sie vorzugsweise eine bogenförmige Außenkontur aufweisen.

Für alle Ausführungsbeispiele kann als Elastomer für die Ausbildung der Dämpfungselemente 7 beispielsweise ein Polyurethan-Elastomer, Kautschuk-Elastomer, thermoplastisches Elastomer oder Silikon-Elastomer oder eine Kombination hiervon eingesetzt werden.

Die inneren und äußeren Verbindungsteile 8, 9 bestehen in allen Ausführungsbeispielen bevorzugterweise aus Metall, beispielsweise aus Stahl.

Die Basiseinheiten 11 bestehen bevorzugterweise ganz oder teilweise aus Metall, beispielsweise Stahl.

### Legende zu den Hinweisziffern:

- 1: längserstrecktes Element
- 2: Verankerungskonstruktion
- 3: Durchdringungsrohr
- 4: Fixteil
- 5: Dämpfungseinrichtung
- 6: Doppelpfeil
- 7: Dämpfungselement
- 8: inneres Verbindungsteil
- 9: äußeres Verbindungsteil
- 10: Dämpfungsmodul
- 11: Basiseinheit
- 12: Teilschaleneinheit
- 13: Verschraubung
- 14: Anbindungsteil
- 15: Befestigungsteil
- 16: Klemmschuh
- 17: Verbindungsstück
- 18: Schraube
- 19: Verbindungsschiene
- 24: Längsachse
- 25: Schraube
- 26: Schraube

## Patentansprüche

1. System zur Ausbildung von Dämpfungseinrichtungen zur Dämpfung von Schwingungen von längserstreckten Elementen (1), insbesondere Zugelementen wie Seilen, Kabeln oder Stäben, durch Verformung von elastomeren Dämpfungselementen (7), wobei ein jeweiliges Dämpfungselement (7) einerseits mit einem inneren Verbindungsteil (8) zur Anbindung des Dämpfungselements (7) an das zu dämpfende längserstreckte Element (1) und andererseits mit einem äußeren Verbindungsteil (9) zur Anbindung des Dämpfungselements (7) an mindestens einem Fixteil (4) verbunden ist, **dadurch gekennzeichnet, dass** das System Dämpfungsmodule (10), die jeweils mindestens ein mit einem inneren und einem äußeren Verbindungsteil (8, 9) verbundenes Dämpfungselement (7) aufweisen, und Basiseinheiten (11) umfasst, an denen jeweils mindestens zwei Dämpfungsmodule (10) befestigbar sind.

2. System nach Anspruch 1, **dadurch gekennzeichnet, dass** eine jeweilige Basiseinheit (11) ein die Form eines Umfangsteils eines Rohrs besitzenden Anbindungsteil (14) zur Anlage am zu dämpfenden Element (1) über einen Teil seines Umfangs aufweist.

3. System nach Anspruch 1 oder 2, **dadurch gekennzeichnet, dass** eine jeweilige Basiseinheit (11) Befestigungsteile (15) zur Befestigung der inneren Verbindungsteile (8) der Dämpfungsmodule (10) aufweist.

4. System nach Anspruch 3, **dadurch gekennzeichnet, dass** die Befestigungsteile (15) vom Anbindungsteil (14) nach außen abstehen.

5. System nach einem der Ansprüche 1 bis 4, **dadurch gekennzeichnet, dass** ein jeweiliges Dämpfungsmodul (10) zumindest ein erstes und ein zweites Dämpfungselement (7) aufweist, die an ihren zueinander gerichteten Seiten mit den beiden Seiten eines zwischen ihnen liegenden Verbindungsteils (8, 9) verbunden sind.

6. System nach Anspruch 5, **dadurch gekennzeichnet, dass** ein jeweiliges Dämpfungsmodul nur zwei äußere Verbindungsteile (9) und ein dazwischenliegendes inneres Verbindungsteil (8) umfasst.

7. System nach einem der Ansprüche 1 bis 6, **dadurch gekennzeichnet, dass** die Dämpfungselemente (7) eines jeweiligen Dämpfungsmoduls (10) im an einer Basiseinheit (11) angebrachten Zustand des Dämpfungsmoduls (10) in Richtung der Längsausdehnung der Dämpfungseinrichtung komprimiert sind.

8. System nach einem der Ansprüche 1 bis 7, **dadurch gekennzeichnet, dass** zumindest einige der Dämpfungselemente (7), vorzugweise alle Dämpfungselemente (7), teilringförmig ausgebildet sind.

9. System nach einem der Ansprüche 1 bis 8, **dadurch gekennzeichnet, dass** die inneren und/oder äußeren Verbindungsteile (8, 9) plattenförmig ausgebildet sind.

10. System nach einem der Ansprüche 1 bis 9, **dadurch gekennzeichnet, dass** die Dämpfungselemente (7) stoffschlüssig mit den Verbindungsteilen (8, 9) verbunden sind, vorzugsweise an die Verbindungsteile (8, 9) angeschäumt sind.

11. System nach einem der Ansprüche 1 bis 10, **dadurch gekennzeichnet, dass** sich die Dämpfungselemente (7) im jeweiligen Verbindungsbereich mit einem Verbindungsteil (8, 9) aufweiten, wobei sie vorzugsweise eine bogenförmige Außenkontur aufweisen.

12. System nach einem der Ansprüche 1 bis 11, **dadurch gekennzeichnet, dass** die inneren und/oder äußeren Verbindungsteile (8, 9) aus Metall bestehen.

13. System nach einem der Ansprüche 1 bis 12, **dadurch gekennzeichnet, dass** das innere und das äußere Verbindungsteil (8, 9), an dem das jeweilige Dämpfungselement (7) festgelegt ist, im Montagezustand in Längsrichtung des längserstreckten Elements (1) voneinander beabstandet sind und ein jeweiliges Dämpfungselement (7) bezogen auf seine Erstreckung in Längsrichtung des längserstreckten Elements (1) an seinem einen Ende mit der zum äußeren Verbindungsteil (9) gerichteten Seite des inneren Verbindungsteils (8) und an seinem anderen Ende an der zum inneren Verbindungsteil (8) gerichteten Seite des äußeren Verbindungsteils (9) festgelegt ist.

14. System nach einem der Ansprüche 1 bis 13, **dadurch gekennzeichnet, dass** eine jeweilige Basiseinheit (11) mit den daran befestigten Dämpfungsmodulen (10) eine Teilschaleneinheit (12) ausbildet, wobei im Montagezustand mindestens zwei Teilschaleneinheiten (12) miteinander verbunden sind und das zu dämpfende Element (1) jeweils über einen Teil seines Umfangs umgeben.
